# EUROPEAN PATENT APPLICATION

(11) **EP 4 203 390 A1**
(43) Date of publication of application: **28.06.2023**
(21) Application number: 21217841.2
(22) Date of filing: 27.12.2021
(51) Int. Cl.: H04L 9/40, H04W 4/70

(54) **METHOD AND SYSTEM FOR PROVIDING ACCESS CONTROL IN AN INDUSTRIAL ENVIRONMENT**

(71) Applicant: Siemens Aktiengesellschaft, 80333 München (DE)
(72) Inventor: THURAU, Oliver, 67117 Limburgerhof (DE); GOPALA, Ramya, 560102 Bangalore (IN); DIXIT, Vikas, 560105 Bandenalsandra Jigani (IN); ABHISHEK, Shubhendu, 560029 Bangalore (IN)
(74) Representative: Isarpatent

(57) **Abstract**

The present invention provides a system (100), apparatus (106) and method (400) for providing access control in industrial environment. The method comprises generating, by processing unit, first digital certificate for first entity (102). The first digital certificate comprises information pertaining to authenticity of first entity and set of operational values of first entity. The method comprises receiving request from second entity (104) of industrial environment to access first entity. The request comprises set of operational requirements of second entity. The method comprises generating second digital certificate comprising first set of access rights based on received set of operational requirements. The method comprises transmitting the second digital certificate from first entity to second entity. The method comprises authorizing control of first entity to second entity based on second digital certificate.

## Description

The present invention generally relates to industrial control systems, and more specifically to a method and system for providing access control in an industrial environment.

Industrial environment including plurality of machines or assets in an automated factory, or IoT devices interacting with one another. In some examples, industrial environments may also include automated control systems such as industrial processing and production, public utility infrastructures, and private facility management. Industrial environments thus often include multiple interconnected components in signal communication with each other, either directly or across a network.

Industrial systems may also utilize access control mechanisms to identify, authenticate, and authorize components requesting access to another component in the system. There are, however, drawbacks to the current options available for access control in industrial environments. In particular, in scenarios where the asset builder, asset owner and asse operator are distinct from one another there exists no reliable system or methos to transfer access control from one particular entity to another.

Presently, industrial environments or systems have no viable means of controlling and managing access to industrial control programs, assets or machinery. Furthermore, there is little or no mechanism to secure communications to and amongst industrial assets. Failure to provide reliable and secure communication devices such as controllers and I/O devices can lead to misuse of industrial assets. Furthermore, some users could inadvertently or intentionally make changes to systems that cause a plant to shut down of operate inefficiently. Moreover, in today's world of corporate espionage and terrorism, vulnerable factory systems make for tempting targets. In extreme cases, vulnerable manufacturing systems can expose secure information such as trade secret processes. Moreover, the centralization of information pertaining to different assets in the industrial environment is subjected to high risk of data leak and subsequent loss of revenue or right to privacy.

In the light of the above, there exists a need to provide a system and method for securely and efficiently providing access control from one entity to another in an industrial environment.

Therefore, the object of the invention is to provide a system and method for providing access control in an industrial environment.

The object of the present invention is achieved by a computer-implemented method for providing access control in an industrial environment. The method comprises generating a first digital certificate for the first entity. The first digital certificate comprises information pertaining to authenticity of the first entity and a set of operational values of the first entity. Throughout the present disclosure, the term "industrial environment" may refer to plurality of industrial assets connected with each other to achieve a function. The industrial environment maybe comprised of industrial assets such as industrial machines, industrial devices, industrial controllers, and so forth. In an embodiment, the first entity is a first industrial asset and the second entity is a second industrial asset. In another embodiment, the first entity is a first industrial asset and the second entity is at least one operator requesting control of the first industrial asset. In yet another embodiment, the first entity is an industrial asset owned by a manufacturer of the industrial asset, and the second entity is a device associated with an industry owner requesting control of the first entity.

The method comprises receiving a request from a second entity of the industrial environment to access the first entity. The request comprises a set of operational requirements of the second entity of the industrial environment. The method comprises generating a second digital certificate comprising a first set of access rights based on the received set of operational requirements. The method comprises transmitting the second digital certificate from the first entity to the second entity. The method comprises authorizing a control of the first entity to the second entity based on the second digital certificate.

According to an embodiment, the method further comprises verifying authenticity of the second entity based on the received information. Further, the method comprises establishing a link between the first entity of the industrial system and the second entity of the industrial environment through a distributed ledger if the authenticity of the second entity is correctly verified. In one or more example, the nodes in the distributed ledger maybe a communicating over a blockchain network. Advantageously, the second entity is added into the blockchain network by establishing the link only when the authenticity of the second entity is verified.

According to an embodiment, the method further comprises generating a third digital certificate for authorizing one or more operators to control one or more functionalities of the first entity. The third digital certificate comprises identification information and authorization information. The method comprises transmitting the third digital certificate to each of the user devices associated with respective one or more operators.

According to an embodiment, the method of authorizing the control of the first entity to the one or more operators comprises receiving a request from the one or more operators to access the first entity. The request comprises identification information and authorization information of the operator stored in the third digital certificate. Further, the method comprises verifying identification information and authorization information of the one or more operators stored in the third digital certificate. The method comprises identifying at least one operator from the one or more operators. Herein, the third digital certificate of the at least one operator is correctly verified. The method comprises extracting a second set of access rights from the third digital certificate, wherein the second set of access rights are based on a qualification of the at least one operator. The method comprises authorizing the control of the one or more functionalities of the first entity to at least one operator based on the extracted second set of rights.

The object of the invention is also achieved by an apparatus for providing access control in an industrial environment. The apparatus comprises one or more processing units, and a memory unit communicatively coupled to the one or more processing units. The memory unit comprises an access control module stored in the form of machine-readable instructions executable by the one or more processing units. The access control module is configured to perform method steps described above. The execution of the access control module may also be performed using co-processors such as Graphical Processing Unit (GPU), Field Programmable Gate Array (FPGA) or Neural Processing/Compute Engines.

The object of the invention is also achieved by a system for providing access control in an industrial environment. The system comprising at least one first entity and at least one second entity. Further, the system comprises an apparatus communicatively coupled to the first entity. Herein, the apparatus is configured for providing access control to one or more entities within the industrial environment. In an embodiment, the industrial environment is a distributed ledger having a plurality of nodes implemented using the one or more processing units and the memory. Herein, the nodes may be first entity and the second entity.

The object of the invention is also achieved by a computer program product comprising machine readable instructions, that when executed by one or more processing units, cause the one or more processing units to perform the aforementioned method steps.

This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of a system for providing access control in an industrial environment, according to an embodiment of the present invention;
- FIG 2: is a block diagram of an exemplary distributed ledger implemented using the system for providing access control in an industrial environment, according to an embodiment of the present invention;
- FIG 3: is block diagram of an exemplary apparatus for providing access control in an industrial environment, according to an embodiment of the present invention;
- FIG 4: is a flowchart depicting steps of a method for providing access control in an industrial environment, according to an embodiment of the present invention;
- FIG 5: is a flowchart depicting steps of a method for authorizing the control of the first entity to the one or more operators, according to an embodiment of the present invention; and
- FIG 6: illustrates an exemplary process flowchart for implementing the system of FIG 1 in the industrial environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

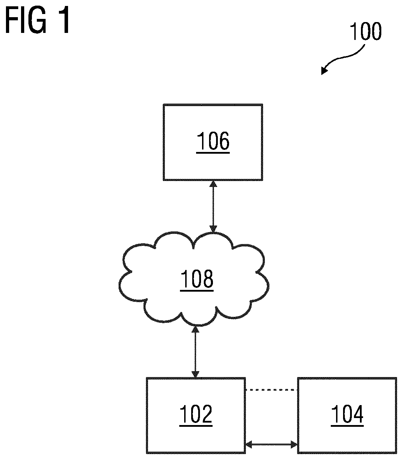

FIG 1 is a block diagram of a system 100 for providing access control in an industrial environment, according to an embodiment of the present invention. The system 100 comprises a first entity 102, a second entity 104, and an apparatus 106. The first entity 102 is communicatively coupled to the apparatus 106 via a communication network 108. The second entity 104 may communicate with the second entity using the communication network 108.In one embodiment, the term "first entity" and "second entity" may refer to an asset. Example of assets 105 include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. The first asset and the second asset maybe associated with a client device (not shown). Non-limiting examples of client devices include, personal computers, workstations, personal digital assistants, human machine interfaces. The client device may enable an owner or operator of the first asset and second asset to view digital certificates and permissions associated therewith. In an example, the client device may also enable the owners and/or operators to input requests for access control of various other assets.

In the one embodiment, the apparatus 106 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 106 may include a module for providing access control in the industrial environment.

Particularly, the system 100 comprises a cloud computing device configured for providing cloud services for providing access control in an industrial environment. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS 106 via APIs and algorithms; and delivers the aforementioned cloud services using cloud-based applications.

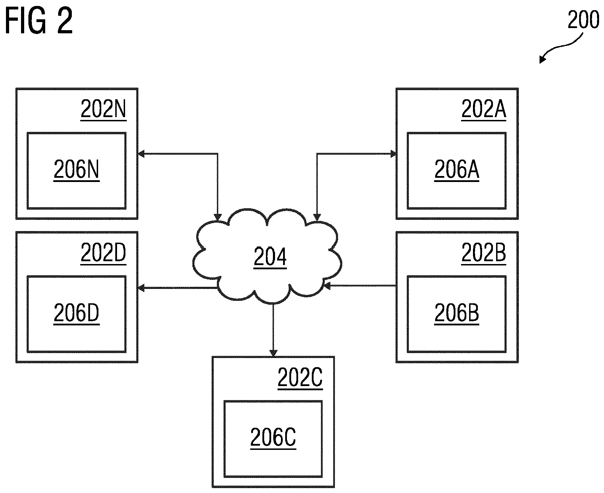

In an exemplary embodiment, the system 100 is implemented as a distributed ledger, wherein distributed ledger has nodes. Each node may belong to an owner of an industrial asset and each of the nodes use the cloud computing hardware and OS to perform one or more actions in the distributed ledger. Each of the nodes comprise a computing device having an access control module and a database. One such exemplary embodiment is explained in further detail in conjunction with FIG 2.

FIG 2 is a block diagram of an exemplary distributed ledger 200 implemented using the system for providing access control in an industrial environment, according to an embodiment of the present invention. In particular, the one or more distributed ledgers 200 (e.g., blockchain network) may be provided across one or more entities over a network 204. Exemplary entities 202A-N may include first entity 102 and second entity 104, parties to a transaction, individual computing devices associated with one or more contractors, operators, verifying authorities, shared computing resources, smart devices (e.g., smartwatches, tablets, smartphones), and so on. The entities 202A-N may store the distributed ledgers on computing systems which may be utilized in maintaining and/or updating the distributed ledgers. Each entity 202A-N may be configured for storing a version of the distributed ledger or a portion thereof.

In some examples, the distributed ledger is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. It allows individual vehicles joining the network to define their terms and conditions using smart contracts This program is executed in an isolated secure environment on all nodes and verified in a distributed manner.

In some embodiments, the entities 202A-N include at least a set of computing devices 206A-N. For example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for asset information, contract information, contractor information, operator information and so forth. Furthermore, the ledger may store digital certificates generated by the first entity and second entity, operational requirements of the assets, transactions involving different entities, automated "smart contracts" relating to control of assets and so forth. Smart contracts are computer instructions or code intended to facilitate, verify, or enforce the negotiation or performance of a contract. Further, the ledger and ledger entries may utilize encryption technology to facilitate and/or validate digital signatures, for example, facilitating multi-signature documentation, ensuring the authenticity and integrity of assets, operators, and so on. Each of the one or more entities 202A-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized, and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across entities 202A-N and used to provide control access of an asset to other assets, operators, or other entities in a secure manner. The distributed ledger may have entries linked to one another using cryptographic asset information, contractor information, operator information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more entities 202 and 204 along with corresponding transaction data. The block also includes a timestamp indicating when the block was created. If there is more than one block in the blockchain, each block beyond a first block further includes a hash of a previous block in the blockchain. The term "unique identifier" as used herein refers to a value or code that uniquely identifies an asset in the industrial environment.

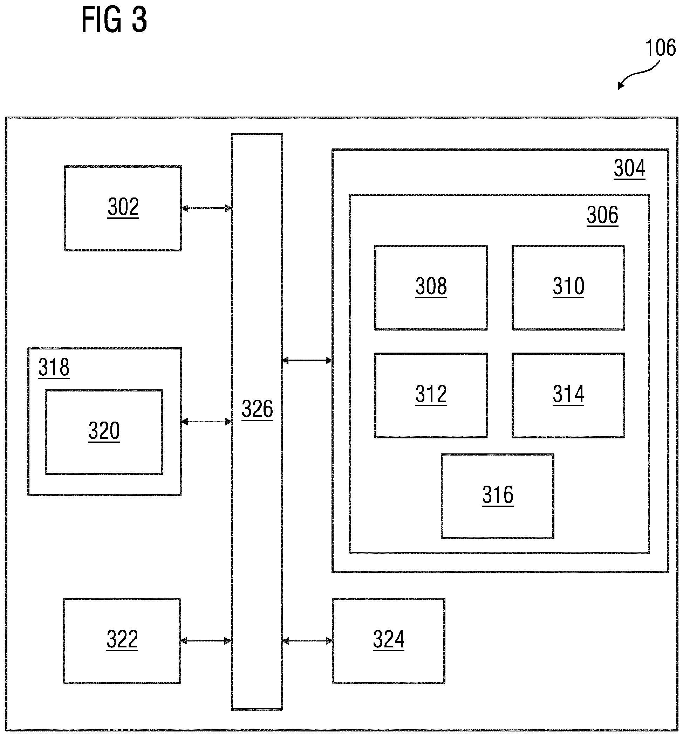

FIG 3 is block diagram of an exemplary apparatus 106 for providing access control in an industrial environment, according to an embodiment of the present invention. The apparatus 106 may also be associated with different nodes in the distributed ledger to generate a decentralized network of one or more assets in the industrial environment. In an exemplary embodiment, the apparatus 106 is communicatively coupled to the first entity 102. In another exemplary embodiment, specific to a blockchain network, the apparatus 106 is integrated with the computing devices 206A-N of FIG 2) associated with the nodes 202A-N.

The apparatus 106 may be a personal computer, a laptop computer, a tablet, a server, a virtual machine, and the like. The apparatus 106 includes a processing unit 302, a memory 304 comprising an access control module 306, a storage unit 318 comprising a database 320, an input unit 322, an output unit 3324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or non-volatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the access control module 306 stored in the form of machine-readable instructions on any of the above-mentioned storage media and may be in communication to and executed by the processing unit 302. When the machine-readable instructions are executed by the processing unit 302, the access control module 306 causes the processing unit 302 to provide control of the first entity 102 to the second entity 104 in response to an access request by the second entity 104.

The access control module 306 further comprises request processing module 308, digital certificate generation module 310, verification module 312, transmission module 314, and authorization module 316.

The request processing module 308 is configured for receiving a request from the second entity 104 to access the first entity 102. The request processing module 308 receives and processes the request to obtain the set of operational requirements of the second entity 104. In particular, the request processing module 308 is configured for extracting information from the inputs provided by the second entity 104. Herein, the information extracted is the set of operational requirements of the second entity 104.

The digital certificate generation module 310 is configured for generating the first digital certificate, second digital certificate and the third digital certificate. Herein, the first digital certificate comprises information pertaining to authenticity of the first entity 102 and a set of operational values of the first entity 102. The second digital certificate comprises the first set of access rights based on the received set of operational requirements of the second entity 104. The third digital certificate comprises identification information and authorization information of the operators requesting access of the first entity 102.

The verification module 312 is configured for verifying the authenticity of the second entity 104 based on the recevied information from the second entity. Furthermore, the verification module 312 is configured for verifying the identification information and the authorization information of the one or more operators stored in the third digital certificate.

The transmission module 314 is configured for transmitting the second digital certificate from the first entity 102 to the second entity 104. Furthermore, the transmission module 314 is configured for transmitting the third digital certificate to each of the user devices associated with respective one or more operators.

The authorization module 316 is configured for establishing a link between the first entity 102 of the industrial environment and the second entity 104 of the industrial environment via the distributed ledger if the authenticity of the second entity 104 is correctly verified. Furthermore, the authorization module 316 is configured for authorizing a control of the first entity 102 to the second entity 104 based on the second digital certificate for a defined period of time. Furthermore, the authorization module 316 is configured for authorizing the control of the one or more functionalities of the first entity 102 to one or more operators.

The processing unit 302 is configured for performing all the functionality of the access control module 306. The processing unit 302 is configured for generating the first digital certificate for the first entity 102 Herein the first digital certificate comprises information pertaining to authenticity of the first entity 102 and a set of operational values of the first entity 102. Further, the processing unit 302 is configured for receiving a request from the second entity 104 of the industrial environment to access the first entity 102. Herein, the request comprises a set of operational requirements of the second entity 104 of the industrial environment. The processing unit 302 comprises generating the second digital certificate comprising a first set of access rights based on the received set of operational requirements. Further, the processing unit 302 comprises transmitting the second digital certificate from the first entity 102 to the second entity 104. The processing unit 302 comprises authorizing a control of the first entity 102 to the second entity 104 based on the second digital certificate for a defined period of time.

The storage unit 318 comprises the database 320 for storing digital certificates, authorization request, data pertaining to operators and so forth. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving input request from the second entity 104 of the industrial environment, and/or one or more operators. The display unit 324 may provide ports to output data via output device with a graphical user interface for displaying received requests, digital certificates, connection information and so forth. The bus 326 acts as interconnect between the processing unit 302, the memory 304, the storage unit 318, the input unit 322, and the display unit 324.

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

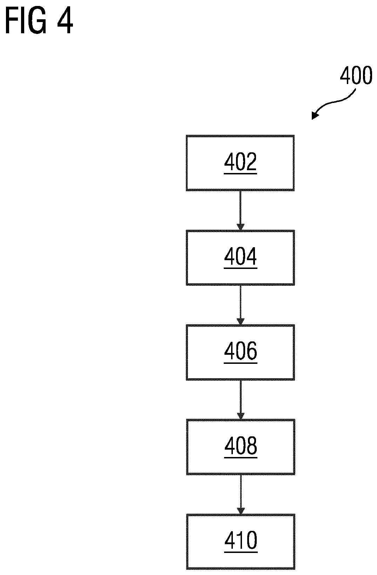

FIG 4 is a flowchart depicting steps of a method 400 for providing access control in an industrial environment, according to an embodiment of the present invention. At step 402, the first digital certificate is generated for the first entity 102. Herein, the first digital certificate comprises information pertaining to authenticity of the first entity 102 and a set of operational values of the first entity 102. Throughout the present disclosure, the term "industrial environment" refers to a technical installation, factory set-up, a complex industrial set-up or a healthcare devices set-up with a plurality of assets such as power plant, manufacturing unit, power grid, process plants, health monitoring equipment and so forth. The first entity 102 and the second the second entity 104 along with several other assets form the industrial environment. Throughout the present disclosure, the term "entity" used in the "first entity" and the "second entity" may refer to assets in the industrial environment. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc.

In an embodiment, the first entity 102 is a first industrial asset and the second entity 104 is a second industrial asset. In another embodiment, the first entity 102 is a first industrial asset and the second entity 104 is at least one operator requesting control of the first industrial asset. In yet another embodiment, the first entity 102 is an industrial asset owned by a manufacturer of the industrial asset, and the second entity 104 is a device associated with an industry owner requesting control of the first entity 102. In an example, the first industrial asset and the second industrial asset are interacting autonomously in the system 100 without human intervention based on the set of requirements, for instance in case of an autonomous control system. In another example, the first industrial asset is requested to provide control to one or more operators of the first industrial asset on request. It should be understood that the terms "first" and "second" as used in "first industrial asset" and "second industrial asset" are only representative of two distinct entities and should not be construed limiting in nature. The terms "first" and "second" do not limit the teachings of the invention to a number or order in any way. In an embodiment, the first entity 102 and the second entity 104 are linked via the distributed ledger. In particular, the different nodes in the distributed ledger communicating with each other over a blockchain network. It will be appreciated that such a system 100 ensures that the data shared between different entities is decentralized among the plurality of nodes in the blockchain network.

Throughout the present disclosure the term "first digital certificate" refers to a set of cryptographic verifiable credentials of the first industrial asset or the first entity 102. The first digital certificate is generated by the processing unit 302. The first digital certificate comprises information pertaining to authenticity of the first entity 102 and a set of operational values of the first entity 102. In an example, the first digital certificate is generated by a manufacturer of the first industrial asset. The first digital certificate comprises verifiable credentials like manufacturer details, place of manufacture, date of manufacture, useful life of the asset, and other information defining authenticity of the asset. Furthermore, the first digital certificate comprises set of operational values such as parameter value constraints for the usage of the machine. For example, in case of a motor, operating voltage and operating current of the motor is also defined in the first digital certificate along with the information details of the manufacturer.

In an embodiment, the first digital certificate is stored in the database 320. In particular, the first digital certificate maybe stored in the form of a machine wallet of the first industrial asset. The machine wallet maybe stored in the database 320. In this scenario, the machine wallet is owned by the manufacturer of the first entity 102 and serves as an identity wallet used as a secure storage for crypto materials like decentralized identifiers, cryptographic keys, verifiable credentials and so forth.

At step 404, a request from the second entity 104 of the industrial environment to access the first entity 102 is received. Herein, the request comprises a set of operational requirements of the second entity 104 of the industrial environment. In an example, the second entity 104 is the second industrial asset, a device associated with a contractor, or one or more operators requesting access to the first entity 102. The set of operational requirements may be one or more tasks that the second entity 104 is requesting to perform on the first entity 102. In an example, the first entity 102 is a motor, then the set of operational requirements maybe a task set such as pumping 1200 liters of water from a reservoir. In another example, the first entity 102 is a chipping machinery, then the task set maybe to refine the dimensions of an iron slab to a predefined measurement. It will be appreciated that the set of operational requirements may vary from one industrial asset to another. In another embodiment, the set of operational requirements maybe parameter specific such as the operational requirements may define voltage value, current value, pressure value, torque value, hours of operation and so forth.

At step 406, a second digital certificate comprising a first set of access rights is generated based on the received set of operational requirements. Throughout the present disclosure the term "second digital certificate" refers to a set of cryptographic verifiable credentials of the second entity. The second digital certificate is generated by the processing unit 302 on behalf of the first entity 102. In an embodiment, the authenticity of the second entity 104 is verified based on the received information. Further, if the authenticity of the second entity 102 is correctly verified, then a link is established between the first entity 102 of the industrial system and the second entity 104 of the industrial system through the distributed ledger. In an example, the second entity 104 after verification is added to the blockchain network of the industrial system. In an exemplary implementation, when the request to access the first entity 102 is recevied, the second entity is verified for authenticity by a verifying authority. In an example, the verifying authority may be the first entity 102. In another example, the verifying authority may be a third party authorized to verify entities and add the entities to the blockchain network.

The second digital certificate comprises the first set of access rights. The first set of access rights are determined based on the operational requirements of the second entity 104. The first set of access rights define the conditions for operation or usage of the first entity 102 by the second entity 104. In an example, the first set of access rights are determined based on an agreement between the manufacturer of the asset and the second entity 104 requesting access for use of operation of the asset. In an example, the processing unit 302 is configured to compare the requirements of the second entity 102 with the set of operational values of the first entity 102 and determine the conditions of usage of the first entity 102. The second digital certificate is digitally signed by the first entity 102 and the digital certificate serves as a digital machine passport for operating the first entity 102. The second digital certificate may include conditions of usage of the first entity 102 such as duration of operation of the asset, one or more functionalities of the asset available for use, time period for which the second digital certificate is valid, and so forth.

At step 408, the second digital certificate from the first entity 102 to the second entity 104. The digitally signed second digital certificate is transmitted to the second entity over the blockchain network. The second digital certificate maybe stored in a database associated with the second entity 104. The database 308 may serve as a company wallet of the second entity. At step 410, a control of the first entity 102 is authorized to the second entity 104 based on the second digital certificate. The control of operation of the first entity 102 is provided to the second entity 104 based on the conditions of operations specified in the second digital certificate.

According to an embodiment, when the first entity 102 is the first industrial asset 102 and the second entity 104 is the second industrial asset, then the second entity 104 is directly provided control of the first entity 102 based on the second digital certificate. In another embodiment, when the first entity 102 is the first industrial asset and the second entity 104 is at least one operator requesting control of the first industrial asset, then the third digital certificate is generated for authorizing one or more operators to control the first entity 102. In this particular case, the one or more operators directly request the first entity 102 for access. In yet another embodiment, when the first entity 102 is the first industrial asset and the second entity 104 is a device associated with an industry owner requesting control of the first entity 102, then the third digital certificate is generated for authorizing one or more operators to control the first entity 102 based on the second digital certificate of the second entity 104. In this particular case, the one or more operators request the access to the first entity 102 via the second entity 104.

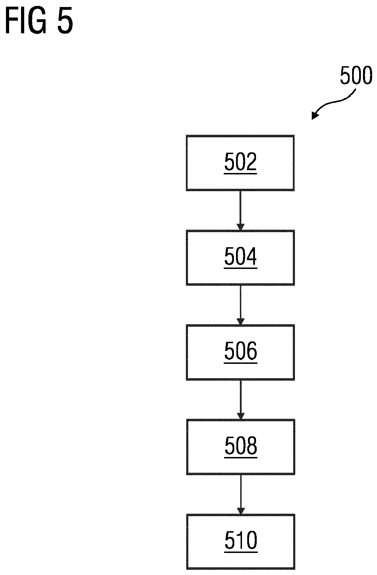

According to an embodiment, the third digital certificate is generated for authorizing one or more operators to control one or more functionalities of the first entity 102. The third digital certificate comprises identification information pertaining to the one or more operators and authorization information pertaining to right to use the first entity 102. Further, the third digital certificate is transmitted to each of the user devices associated with respective one or more operators. In an exemplary embodiment, the third digital certificate is transmitted to the one or more user devices over a blockchain network. Furthermore, the one or more operators are verified by a verifying authority and then the third digital certificated is issued for the operators. In an example, the verifying authority maybe the first entity 102 such as the asset builder. In another example, the verifying authority maybe the second entity 104 such as a contractor or owner of the asset. In another example, the verifying authority maybe a third party. The third digital certificate may be stored in database associated with the user devices of the one or more operators. In an example, the database maybe a user wallet that serves as a digital passport to access the first entity 102. The method of authorizing the control of one or more entities to the one or more operators is explained further with the help of FIG 5.

FIG 5 is a flowchart depicting steps of a method 500 for authorizing the control of the first entity 102 to the one or more operators, according to an embodiment of the present invention. At step 502, a request from the one or more operators to access the first entity is received. The request comprises identification information and authorization information of the operator stored in the third digital certificate. In particular, the request comprises identification information of the one or more operators and the authorization information of having access to control the one or more functionalities of the first entity 102.

At step 504, identification information and authorization information of the one or more operators stored in the third digital certificate is verified. The authenticity of the third digital certificate is verified based on the digital signature of the asset builder or the asset renter/contractor. In an example, the verifying authority maybe the first entity 102 such as the asset builder. In another example, the verifying authority maybe the second entity 104 such as a contractor or owner of the asset. In another example, the verifying authority maybe a third party. The identification of the one or more operators is based on verification of information provided in the personal data and qualifications of the one or more operators. In an example, the qualification maybe that the operator must be 21 years of age. It will be appreciated that no personal data is disclosed to the system 100. Advantageously, the identification information such as personal information including age, sex, name, residential address is not extracted during verification of identity of the one or more operators. The system 100 aims to conserve the right to privacy of the operators. Therefore, only essential information pertaining to qualifications of the operator and a minimum age required to operate the first entity 102 is processed. In an exemplary implementation, the verification is done using a zero knowledge proof procedure known in the art. Therefore, no personal data that maybe disclosed in an identification card (such as driving license) is disclosed to the first entity 102. Notably, zero knowledge proof is a state-of-the-art method of authentication that, through the use of cryptography, allows one entity to prove to another entity that they know a certain information or meet a certain requirement without having to disclose any of the actual information that supports that proof. The entity that verifies the proof has thus "zero knowledge" about the information supporting the proof but is "convinced" of its validity.

At step 506, at least one operator from the one or more operators. In a case when the verification of a particular operator fails, then that operator is denied control access to the first entity 102. Therefore, the operator having correctly verified the details are identified from the one or more operators. At step 508, a second set of access rights is extracted from the third digital certificate. Herein, the second set of access rights are based on a qualification of the at least one operator. The second set of access rights define the access rights of the one or more operators as agreed with the asset seller or asset owner. The second set of access rights are defined at the time of issuance of the third digital certificate to the at least one operator. In an example, if a particular operator is qualified for operating a cutting machine tool only at low speed, then the operator will be denied access to the cutting machine tool if the user is trying to access the cutting machine tool at a high speed. At step 510, the control of the one or more functionalities of the first entity 102 is authorized to at least one operator based on the extracted second set of rights.

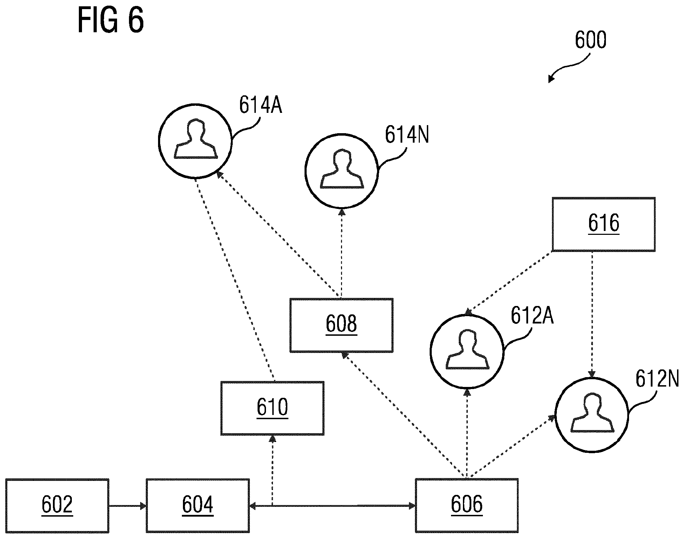

FIG 6 illustrates an exemplary process flowchart 600 for implementing the system 100 in the industrial environment, according to an embodiment of the present invention. For the sake of this example, let us consider that the first entity 602 (such as the first entity 102) and the second entity 604 (such as the second entity 104) are a part of a distributed ledger. In particular, the first entity 602 and the second entity 604, 606, 608 and one or more operators 612A-N, 614A-N are communicating over a blockchain network (not shown). In this particular example, first entity 602 is a machine builder, second entity 604 is a machine owner, second entity 606 is a machine renter, second entity 608 is a machine contractor. The machine builder 602 generates a first digital certificate comprising information pertaining to authenticity of the machine builder 602 and a set of operational values of the machine builder 602. In particular, the first digital certificate comprises verifiable credentials like manufacture details and operational certificates stating constraints for machine usage. The verifiable credentials are stored in the machine wallet. Further, based on a request from the machine owner 604, a contractual agreement between the machine builder 602 and machine owner 604 is created. Based on the contractual agreement, a first set of access rights are determined in the form of verifiable credentials. The second digital certificate is generated based on the first set of access rights and is transferred to the company wallet of the machine owner 604. In a similar manner, a rental agreement is concluded between the machine owner 604 and the machine renter 606. Therefore, the second digital certificate is transferred from the company wallet of the machine owner 604 to the machine renter 606. Similarly, a rental agreement is concluded between the machine renter 606 and the machine contractor 608. Therefore, the second digital certificate is transferred from the company wallet of the machine renter 606 to the machine contractor 608. In the process the authenticity of the second entity 604, 606, and 608 maybe verified by a verification module 610.

It should be understood that the contractual agreement maybe concluded between organizations of the machine builder 602 and the machine owner 604, machine renter 606 and machine contractor 608, the machine is going to operated by the one or more operators 612A-N and 614A-N. The identification and qualification of the one or more operators 612A-N and 614A-N is verified by a verifying authority 616 such as government body or can be verified directly checking the identification cards of the one or more operators 6112A-N and 614A-N. Once, the one or more operators are verified, the third digital certificate is generated by respective entities to define the rights of disposal of the usage of the machine. The third digital certificate is transferred to each of the user devices (not shown) of the one or more operators 612A-N and 614A-N. In particular, the rights of disposal maybe issued by the machine renter in the from of verifiable credentials to the user wallet of respective operators 612A-N and 614A-N.

Advantageously, the present invention provides a decentralized, secure, tamper-proof, and efficient system for providing access control in an industrial environment. Beneficially, the abovementioned method and system can be easily extended to be implemented in an automated or semi-automated industrial environment for both tangible and non-tangible assets. Furthermore, the present invention may be well suited for scalable environments (e.g., the number of nodes can be scaled up and down), and/or environments where a high degree of decentralization and/or security are important. The present invention provides a simplified and/or potentially more trustworthy maintenance (e.g., through using a specific distributed ledger), and improved operational efficiency. Furthermore, the present invention aims at efficiently transferring rights of disposal of tangible and non-tangible assets from one entity to another. Advantageously, such a system and method would ensure mitigation of misuse of assets or in some cases risk of theft of the assets.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

List of reference numbers:
- 100: system
- 102: first entity
- 104: second entity
- 106: apparatus
- 108: communication network
- 200: Distributed ledger
- 202A-N: Entities
- 204: Network
- 206A-N: Computing devices
- 302: one or more processing units
- 304: memory unit
- 306: access control module
- 308: request processing module
- 310: digital certificate generation module
- 312: verification module
- 314: transmission module
- 316: authorization module
- 318: Storage unit
- 320: database
- 322: input unit
- 324: display unit
- 326: bus
- 400: method for providing access control in an industrial environment
- 500: method for authorizing the control of the first entity to the one or more operators
- 600: process flowchart for implementing the system of in the industrial environment

## Claims

1. A computer-implemented method (400) for providing access control in an industrial environment, the method comprising:
generating, by a processing unit (302), a first digital certificate for the first entity (102), wherein the first digital certificate comprises information pertaining to authenticity of the first entity and a set of operational values of the first entity;
receiving, by the processing unit (302), a request from a second entity (104) of the industrial environment to access the first entity (102), wherein the request comprises a set of operational requirements of the second entity of the industrial environment;
generating, by the processing unit (302), a second digital certificate comprising a first set of access rights based on the received set of operational requirements;
transmitting, by the processing unit (302), the second digital certificate from the first entity (102) to the second entity (104);
authorizing a control of the first entity (102) to the second entity (104) based on the second digital certificate.

2. The method according to claim 1, further comprising:
verifying, by a processing unit (302), authenticity of the second entity (104) based on the received information;
establishing, by a processing unit (302), a link between the first entity (102) of the industrial environment and the second entity (104) of the industrial environment through a distributed ledger if the authenticity of the second entity is correctly verified.

3. The method according to claim 1, wherein the first entity (102) is a first industrial asset and the second entity (104) is a second industrial asset.

4. The method according to claim 1, wherein the first entity (102) is a first industrial asset and the second entity (104) is at least one operator requesting control of the first industrial asset.

5. The method according to claim 1, wherein the first entity (102) is an industrial asset owned by a manufacturer of the industrial asset, and the second entity (104) is a device associated with an industry owner requesting control of the first entity.

6. The method according to any of the claims 4 or 5 further comprising authorizing a control of the first entity (102) to one or more operators (612A-N, 614A-N) through the second entity (104).

7. The method according to any of the claims 5 or 6 further comprising:
generating, by a processing unit (302), a third digital certificate for authorizing one or more operators (612A-N, 614A-N) to control one or more functionalities of the first entity (102), wherein the third digital certificate comprises identification information and authorization information; and
transmitting, by a processing unit (102), the third digital certificate to each of the user devices associated with respective one or more operators (612A-N, 614A-N).

8. The method according to claims 4 to 6, wherein authorizing the control of the first entity (102) to the one or more operators (612A-N, 614A-N) comprises:
receiving, by a processing unit (302), a request from the one or more operators (612A-N, 614A-N) to access the first entity (102), wherein the request comprises identification information and authorization information of the operator stored in the third digital certificate;
verifying, by a processing unit (302), identification information and authorization information of the one or more operators (612A-N, 614A-N) stored in the third digital certificate;
identifying, by the processing unit, at least one operator (612A-N, 614A-N) from the one or more operators (612A-N, 614AN), wherein the third digital certificate of the at least one operator is correctly verified;
extracting a second set of access rights from the third digital certificate, wherein the second set of access rights are based on a qualification of the at least one operator (612A-N, 614A-N); and
authorizing the control of the one or more functionalities of the first entity (102) to at least one operator (612A-N, 614A-N) based on the extracted second set of rights.

9. An apparatus (106) for providing access control in an industrial environment, the apparatus comprising:
one or more processing units (302);
a memory unit (304) communicatively coupled to the one or more processing units (302), wherein the memory unit comprises an access control module (306) stored in the form of machine-readable instructions executable by the one or more processing units, wherein the access control module is configured to perform method steps according to any of the claims 1 to 8.

10. A system (100) for providing access control in an industrial environment, the system comprising:
at least one first entity (102) and at least one second entity (104); and
an apparatus (106) according to claim 8, communicatively coupled to the first entity (102), wherein the apparatus is configured for providing access control to one or more entities within the industrial environment, according to any of the method claims 1 to 8.

11. An industrial environment of claim 10 comprises:
a distributed ledger (200) having a plurality of nodes implemented using the one or more processing units (302) and the memory (304).

12. A computer-program product having machine-readable instructions stored therein, which when executed by one or more processing units (302), cause the processing units to perform a method according to any of the claims 1 to 8.
